(19) Europäisches Patentamt
European Patent Office
Office européen des brevets

(11) **EP 2 014 177 B1**

(12) **EUROPEAN PATENT SPECIFICATION**

(45) Date of publication and mention
of the grant of the patent:
**12.12.2012 Bulletin 2012/50**

(51) Int Cl.:
***A23L 1/0522*** *(2006.01)*     ***A23L 1/09*** *(2006.01)*

(21) Application number: **08012636.0**

(22) Date of filing: **11.07.2008**

(54) **Hydrocolloid blend for innovative texture**

Hydrokolloid-Mischung für innovative Struktur

Mélange d'hydrocolloïde pour texture innovante

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.07.2007 US 776270**

(43) Date of publication of application:
**14.01.2009 Bulletin 2009/03**

(73) Proprietor: **Brunob II B.V.**
**6824 BM Arnhem (NL)**

(72) Inventors:
• **Henault-Mezaize, Leonora**
**Hoboken**
**New Jersey 07030 (US)**
• **Pagaoa, Ron**
**Edison**
**New Jersey 08820 (US)**
• **Martin, Alicia F.**
**Somerset**
**New Jersey 08873 (US)**
• **Much, Florian**
**22964 OT Steinburg (DE)**

(74) Representative: **Held, Stephan et al**
**Meissner, Bolte & Partner GbR**
**CHEMIE**
**Postfach 86 06 24**
**81633 München (DE)**

(56) References cited:
**EP-A- 0 499 648      EP-A- 1 362 517**
**EP-A- 1 362 869      US-A- 5 468 286**
**US-A- 6 090 594      US-A1- 2006 257 977**

• **FREDRIKSSON H ET AL: "Studies on alpha-amylase degradation of retrograded starch gels from waxy maize and high-amylopectin potato" CARBOHYDRATE POLYMERS, APPLIED SCIENCE PUBLISHERS, LTD. BARKING, GB, vol. 43, no. 1, 1 September 2000 (2000-09-01), pages 81-87, XP004198136 ISSN: 0144-8617**

EP 2 014 177 B1

**Description**

The present invention relates to a hydrocolloid blend containing a waxy starch which has been enzymatically debranched and a non-high amylose starch which has been stabilized and inhibited.

EP-A-1 362 517 describes a slowly digestible starch product, containing debranched low amylose starches, like a waxy starch. The native source of the starches described can be tapioca.

EP-A-1 362 869 discloses a resistance starch composition prepared by completely debranching a low amylose starch comprising highly crystalline, fully debranched linear a-glucans.

**SUMMARY OF THE INVENTION**

The present invention relates to a hydrocolloid blend which exhibits an innovative texture in compositions. The blend consists essentially of a starch which has been enzymatically debranched and a non-high amylose starch which has been stabilized and inhibited in a ratio of 0.8:1 to 8:1.

**DETAILED DESCRIPTION OF THE INVENTION**

The present invention relates to a hydrocolloid blend which exhibits an innovative texture in compositions. The blend consists essentially of a waxy starch containing less than 50% amylose per weight of the starch which has been enzymatically debranched and a non-high amylose starch which has been stabilized and inhibited in a ratio of 0.8:1 to 8:1.

Waxy or low amylose means a starch or starch-containing product (hereinafter starch or starch-containing product shall be referred to as starch) containing less than 10% amylose by weight, in one embodiment less than 5%, in another less than 2% and in yet another embodiment less than 1% amylose by weight of the starch.

Non-high amylose means a starch containing less than 50% amylose by weight of the starch.

Debranched means that the starch has been enzymatically hydrolyzed by an enzyme which specifically degrades the alpha-1,6-D-glucosidic-linkages of the starch molecule.

Granular means that the starch has retained its granular structure and has some crystallinity, such that the birefringence and the Maltese cross under polar light are not destroyed.

Water fluidity (WF) means the empirical measurement of viscosity on a scale of 0-90 and is known in the art. Water fluidity is determined using a Thomas Rotational Shear-type Viscometer (commercially available from Arthur A. Thomas CO., Philadelphia, PA), standardized at 30°C with a standard oil having a viscosity of 24.73 cps, which oil requires 23.12±0.05 sec for 100 revolutions. Accurate and reproducible measurements of water fluidity are obtained by determining the time which elapses for 100 revolutions at different solids levels depending on the starch's degree of conversion: as conversion increases, the viscosity decreases.

Typical sources for the two starches of the blend include cereals, tubers, roots, legumes and fruits. The source can be any variety of starch which includes without limitation corn (maize), pea, potato, sweet potato, banana, barley, wheat, rice, sago, amaranth, tapioca, arrowroot, canna, oat, or sorghum. The starch may be one found in nature or one made using starches found in nature. A native starch as used herein, is one as it is found in nature. Also suitable are starches derived from a plant obtained by standard breeding techniques including crossbreeding, translocation, inversion, transformation or any other method of gene or chromosome engineering to include variations thereof. In addition, starch derived from a plant grown from induced mutations and variations of the above generic composition which may be produced by known standard methods of mutation breeding are also suitable herein.

The blend contains a waxy starch which has been enzymatically debranched to prepare short chain amylose. In one embodiment, the waxy starch is a waxy corn starch. In one embodiment, a slurry of the waxy starch is gelatinized using methods known in the art prior to enzymatic treatment. The solids level, temperature and pH of the starch dispersion may be adjusted to provide better enzyme activity.

Any endo-enzyme which exhibits selectivity in cleaving the 1,6-linkages of the starch molecule, substantially leaving the 1,4-linkages substantially intact, and releasing short chain amylose, may be used. Such enzymes include, without limitation, pullulanase (E.C. 3.2.1.41; pullulan 6-glucanohydrolase) and isoamylase (E.C. 3. 2. 1. 68). In one embodiment, the enzyme used is a heat stable pullulanase obtained from a species of *Bacillus.* This pullulanase will catalyze the hydrolysis of the alpha-1,6 linkages in pullulan and amylopectin, provided that there are at least two glucose units in the side chain. Pullulanase is a linear polymer consisting essentially of D-glucopyranosyl triose units joined by alpha-1,6 linkages. In another embodiment, the enzyme used is isoamylase.

The parameters for enzyme activity will vary depending upon factors including enzyme concentration, substrate concentration, pH, temperature, the presence or absence of inhibitors and other factors. Depending on the type of enzyme, and/or its source, various parameters may require adjustment to achieve sufficient and/or optimum debranching rate. In one embodiment, enzymatic debranching is carried out at the highest feasible solids content to facilitate subsequent drying of the starch while maintaining optimum debranching rates. For example, in one embodiment using pullulanase to produce a starch suitable for use as a fat replacer, a precooked starch dispersion ranging up to 28% solids is used.

Optimum concentrations of enzyme and substrate are governed by the level of enzyme activity which will vary depending upon the enzyme source, the enzyme supplier and the concentration of the enzyme provided in commercially available batches. Although the process of this invention makes use of an enzyme in solution, processes utilizing an enzyme immobilized on a solid support are intended to fall within the scope of this invention.

The skilled artisan will recognize that a higher solids starch system (e.g., above 50% solids) may be employed if the starch is gelatinized by a process which produces adequate mixing to uniformly blend the enzyme and the starch at higher solids. The practitioner also will recognize that the temperature, treatment time and other parameters of the enzymatic debranching process would be adjusted for the higher solids content. Processes which employ higher solids starch dispersions are intended to fall within the scope of this invention and may be used to prepare the short chain amylose.

The reaction may proceed in the presence of buffers to ensure that the pH will be at a more desirable level throughout the degradation. Buffers such as acetates, citrates, or the salts of other weak acids are acceptable as are other buffers known in the art. For example, when the enzyme is Bacillus pullulanase and the temperature is 60°C, in one embodiment the reaction may be carried out at a pH between 3.0 to 7.5, in another between 4.5 and 5.5, and in yet another at about 5.0.

In one embodiment in which the enzyme is Bacillus pullulanase and the pH is 5.0, the aqueous starch dispersion is held at a temperature of 25°-100°C, in another embodiment at 55°-65°C and in a third embodiment at about 60°C during the enzymatic debranching. However, other conditions may be used, particularly when shorter treatment times are desired.

The enzymatic treatment is continued until the desired amount of short chain amylose is produced. The progress of the enzymatic treatment may be measured by various methods. The end point may be determined by change in viscosity of the starch dispersion, by gel permeation chromatography, by reducing group content, iodine reaction or by any other method known in the art for measuring the degree of enzymatic debranching of the starch molecule.

In one embodiment, the debranching end point is measured by determining the viscosity of a starch dispersion at 72°F (22°C) using the funnel viscosity method as set forth in the Examples section. The funnel viscosity method is a well-known, rapid, simple method for determining viscosity, in which the amount of time needed for a standard quantity of starch slurry to flow through a standard size funnel is recorded. In one embodiment, the funnel viscosity is from 0 to 25 seconds, in a second embodiment from 0 to 12 seconds.

In another embodiment, the degree of starch debranching is measured by gel permeation chromatography. After separating the starch into its different molecular weight fractions, the percentage of short chain amylose is determined by calculating the percentage, by weight, of the low molecular weight fraction of the partially debranched starch. It will be understood by the practitioner that these percentages are approximately equal to the amount of short chain amylose which has been liberated from the amylopectin by the debranching enzyme. Experimental error in gel permeation chromatography (e.g., due to contamination by the enzyme, or by sugars or dextrins introduced with the starch, the enzyme solution, the buffer or other process components) may result in a percent low molecular weight fraction which may range up to 5% more or less than the percent short chain amylose of the starch sample.

The percentage of short chain amylose needed for a particular application depends on the type of starch utilized, the presence and nature of any substituent groups and the degree of conversion. The practitioner will be able to select a suitable starch and determine the necessary debranching for any particular end use with a minimum of experimentation. In one embodiment, the starch is debranched to yield sufficient short chain amylose to create a mixture comprising from 12 to 100% short chain amylose, in another embodiment from 35 to 100% short chain amylose. In one embodiment, the short chain amylose is greater than 80%, in another greater than 85%, and in a further embodiment, in excess of 89%. One skilled in the art would recognize that substantially 100% amylose is intended to mean that which theoretically comprises 100%, by weight, of linear chains and, in practice, that which is so highly debranched that further enzyme activity produces no measurable change in the percentage of linear chains.

After the desired degree of starch debranching has been reached, the enzyme may be deactivated by means known in the art. For example, pullulanase is rapidly deactivated at temperatures above about 70°C, therefore, the reaction may be conveniently terminated by increasing the temperature of the starch dispersion to at least 75°C for about 15 minutes.

In one embodiment, the starch will be pregelatinized (a precooked, coldwater-swelling starch) and in another embodiment will be a fluidity starch further converted by mild acid degradation, heat dextrinization, alpha-amylase degredation or any one of several methods that are well known in the art. See for example, M. W. Rutenberg, "Starch and Its Modifications" P. 22-36, in Handbook of Water-Soluble Gums and Resins, R. L. Davidson, editor, McGraw Hill, Inc., New York, N.Y., 1980. A combination of one or more of these conversion techniques may be used. The conversion may be carried out before or after the enzymatic treatment. In one embodiment, the starch is converted to a Water Fluidity (WF) of up to about 60.

In another embodiment, the starch is chemically modified by crosslinking, esterifying, or etherifying. Such chemical modification may be carried out before or after enzymatic treatment and may be to any degree of substitution. In one embodiment, the starch is treated with a hydrophobic derivative, in another with an alkenyl succinic anhydride, and in yet another, with an octenyl succinic anhydride. In yet a further embodiment, the starch is treated with octenylsuccinic anhydride to form a starch ester, using sufficient reactant to result in a starch derivative containing from 0.25 to 3.0%, by weight, of octenylsuccinate.

The blend further contains a non-high amylose starch which has been stabilized and inhibited. Such modifications are well known in the art as are the techniques for modifying.

In one embodiment, the starch is stabilized as follows. An aqueous starch slurry containing from 10 to 40% solids is prepared. From 20 to 30% percent sodium sulfate based on the weight of the starch is added. The pH is then adjusted to 11 to 13 by addition of a 3% sodium hydroxide solution in an amount of from 40 to 60% based upon the weight of the starch. A stabilizing agent is added in an amount of sufficient to provide stability against retrogradation during storage of the starch. The temperature is brought to below 50°C and the process is allowed to continue for 18 to 24 hours.

The stabilizing agent is added in an amount of 1% to 25%, in one embodiment from 3 to 20%, and in another embodiment from 5 to 15%, by weight of the starch. Stabilizing agents suitable for the present invention include, but are not limited to alkylene oxides, such as ethylene and propylene oxide, acetate, phosphate, and succinates such as octenyl succinic anhydrides. In one embodiment, the stabilizing agent is propylene oxide and the stabilizing agent is added in an amount of from 1% to 25%, in another embodiment from 3 to 10%, and in a further another embodiment from 5 to 10%, by weight of the starch.

In one embodiment, the starch is inhibited as follows. A starch slurry is brought to a temperature of 30°C and inhibited by addition of a crosslinking agent. The temperatures which may be used are known in the art and are dependent upon the crosslinking agent used, the time and pH of the reaction, and the degree of crosslinking desired.

Crosslinking agents suitable for the present invention include, but are not limited to adipic/acetic mixed anhydride, epichlorohydrin, sodium trimetaphosphate, sodium trimetaphosphate/sodium tripolyphosphate, acrolein, and phosphorous oxychloride. In one embodiment, the crosslinking agent is phosphorous oxychloride.

Epichlorohydrin or phosphorous oxychloride is added in an amount of from 0.001 to 1%, in one embodiment from 0.01 to 0.15%, and in yet another embodiment from 0.01 to 0.05% by weight of the starch.

Adipic/acetic mixed anhydride, sodium trimetaphosphate, or sodium trimetaphosphate/sodium tripolyphosphate is added in an amount of from 0.1 to 10%, in one embodiment from 0.1 to 1.5%, and in yet another embodiment from 0.1 to 0.5% by weight of the starch.

Acrolein is added in an amount of from 0.001 to 0.6%, in one embodiment from 0.1 to 0.4%, by weight of the starch.

The reaction is allowed to continue for approximately 15 minutes to 24 hours depending upon the temperature, and pH of the reaction, the crosslinking agent, and the degree of inhibition desired: the time of reaction is within the skill of one in the art and in one embodiment is for sufficient time to cause the granule to stay intact as a swollen particle after cooking.

Inhibition is intended to include not only chemically inhibited or crosslinked starches, but also thermally inhibited starch. Thermal inhibition is well known in the art, see for example WO 95/04082 and WO 96/40794.

Inhibition may be conducted either before or after stabilization, and in one embodiment is conducted after stabilization. In one embodiment, after modification, the pH is adjusted to approximately 3.0 with sulfuric acid and held for one hour to remove unreacted stabilizing agent.

The above methods of stabilizing and inhibiting the starch is meant to be exemplary. Other methods, known in the art, may be used. For example, see Wurzburg, O.B., Modified Starches: Properties and Uses, CRC Press, Inc.: Florida (1986).

In one embodiment, the stabilization is carried out using propylene oxide and the inhibition is carried out using phosphorous oxychloride.

In one embodiment, the second component of the blend, the stabilized, inhibited starch must remain in the granular state. One skilled in the art is well aware of the procedures which are likely to gelatinize a starch such that it is no longer composed of starch granules, such as heating in water.

The second component of the blend has a swelling volume of from 10 to 60, in another embodiment from 10 to 25, in a further embodiment from 25 to 40, and in yet another embodiment from 40 to 60. Swelling volume is determined using the methodology defined in the Examples section.

The starch may be purified to remove impurities, by-products, off-flavors and colors by methods known in the art such as by dialysis, filtration, ion exchange processes, or centrifugation. The starch may further be pH adjusted and/or dried using methods known in the art such as drum drying spray-drying, freeze-drying or air-drying. Such purification and/or drying may be done on the individual starches or the blended starches as long as the methodology does not adversely affect the requirements of the starch.

The blend has a fracture stress value of from 1.5 kPa to 5.5 kPa. Fracture stress value is determined using the methodology defined in the Examples section.

The blend has a fracture strain value of from 0.35 to 0.86 mm/mm. Fracture strain value is determined using the methodology defined in the Examples section.

The resultant blend contains both a waxy starch which has been enzymatically debranched using an endo-enzyme and a non-high amylose starch which has been stabilized and inhibited. The ratio of the enzymatically debranched starch to the stabilized, inhibited starch is from 0.8:1 to 8:1 and in another embodiment in a ratio of 1:1 to 5:1.

The blend may be used in any ingestible product, particularly in food products. Food products include without limitation dressings, including pourable dressings and spoonable dressings; pie fillings, including fruit and cream fillings; sauces, including white sauces and dairy-based sauces such as cheese sauces; gravies; lite syrups; puddings; custards; yogurts; sour creams; beverages, including dairy-based beverages; glazes; and soups. Further, foodstuffs is intended to include those which undergo various processing and storage conditions including, but not limited to, retorting, aseptically filled packaging, refrigeration, and freezing.

The product will contain additional ingredients other than the blend, specifically at least one additional ingestible (edible) ingredient. In one embodiment, the product will contain at least the blend and water. Other ingestible ingredients are known in the art and include, without limitation, milk solids, eggs, sugar, maltodextrin, and flour.

The blend may be used in any amount necessary to achieve the texture desired in the final product. In one embodiment, the blend provides the product with a non-sticky, elastic, and chewy texture. The starch may be added in any amount of from about 0.01% to about 15% of the composition by weight. In one embodiment, the blend is added such that the product contains a concentration of the second component (stabilized, inhibited starch) in an amount of at least 4.5%, in another embodiment at least 6.5%, and in a further embodiment at least 8% by weight of the product. In yet another embodiment, the blend is added such that the product contains the blend at a concentration of from 6.5% to 15%, and in still another embodiment from 4.5 to 12% by weight of the product.

ADDITIONAL EMBODIMENTS

The following embodiments are presented to further illustrate and explain the present invention and should not be taken as limiting in any regard.

1. A blend consisting essentially of a waxy starch which has been enzymatically debranched and a non-high amylose starch which has been stabilized and inhibited in a ratio of from 0.8:1 to 8:1.

2. The blend of embodiment 1, wherein both starches are waxy corn starches.

3. The blend of embodiment 1, wherein the non-high amylose starch is a tapioca starch.

4. The blend of any one of embodiments 1-3, wherein the stabilized and inhibited starch is a granular starch.

5. The blend of any one of embodiments 1-4, wherein the stabilized and inhibited starch has been stabilized with propylene oxide and inhibited with phosphorous oxychloride.

6. The blend of any one of embodiments 1-5, wherein the debranched starch has been debranched using isoamylase.

7. The blend of any one of embodiments 1-5, wherein the debranched starch has been debranched using pullulanase.

8. The blend of any one of embodiments 1-7, wherein the debranched starch is debranched to greater than 80% short chain amylose.

9. The blend of any one of embodiments 1-7, wherein the debranched starch is debranched to greater than 85% short chain amylose.

10. The blend of any one of embodiments 1-9, wherein the stabilized and inhibited starch has a swelling volume of 10-60.

11. The blend of any one of embodiments 1-10, wherein the blend has a fracture stress value of from 1.5 kPa and 5.5 kPa.

12. The blend of any one of embodiments 1-11, wherein the blend has a fracture strain value of from 0.35 to 0.86 mm/mm.

13. The blend of any one of embodiments 1-12, wherein the ratio of the waxy starch which has been enzymatically debranched to the non-high amylose starch is 1:1 to 5:1.

14. A product comprising the blend of any one of embodiments 1-13 and at least one additional ingestible ingredient.

15. The product of embodiment 14, wherein the blend is added in an amount of from 0.01% to 15% of the composition by weight.

16. The product of embodiment 14 or 15, wherein the stabilized and inhibited starch is at a concentration of at least 4.5% (wt/wt) of the product.

17. The product of embodiment16, wherein the stabilized and inhibited starch is at a concentration of at least 6.5% (wt/wt) of the product.

18. The product of embodiment17, wherein the stabilized and inhibited starch is at a concentration of at least 8% (wt/wt) of the product.

19. The product of any one of embodiments 14-18, wherein the blend is at a concentration of from 6.5% to 15% (wt/wt) of the product.

20. The product of embodiment 19, wherein the blend is at a concentration of from 4.5% to 12% (wt/wt) of the product.

EXAMPLES

The following starches, set forth in Table 1, were evaluated in the examples.

Table 1 - Description of Starches

| ID# | Short Description | Starch Preparation | Swelling volume Q (ml/g) |
|---|---|---|---|
| A | Waxy corn starch enzymatically debranched | Dispersed waxy corn starch treated with approx 6% Promozyme 400L (from Novo) until approx 85% short-chain-amylose is obtained and recovered by spray-drying | |
| B | Waxy corn starch treated with propylene oxide and phosphorous oxychloride | Waxy corn starch treated with PO to obtain approx. 6.6% bound PO and further treated with approx 0.004% POCl3 | 41.4 |
| C | Waxy corn starch treated with propylene oxide and phosphorous oxychloride | Waxy corn starch treated with PO to obtain approx. 5.2% bound PO and further treated with approx 0.036% POCl3 | 22.8 |
| D | Waxy corn starch treated with propylene oxide and phosphorous oxychloride | Waxy corn starch treated with PO to obtain approx. 3.4% bound PO and further treated with approx 0.0065% POCl3 | 39.2 |
| E | Tapioca starch treated with propylene Tapioca starch treated with propylene oxide and phosphorous oxychloride | Tapioca starch treated with PO to obtain approx. 5.0% bound PO and further treated with approx 0.011 % POCl3 | 24.8 |

The following methods were used throughout the examples.

Method of measurement for Fracture Stress and Fracture Strain

The fracture strain $\varepsilon$ and fracture stress ($\tau$) were measured for gelled samples only through compression measurements.

An universal tensile tester Instron model 5565 was used to test all starch gels. A crosshead speed of 4mm/mm/min was utilized for testing. A 50 Newton load cell was used for measurements. The gel testing method was set up with a 0.01 N preload.

Large gel cylinder pieces were cut using corkborer #15 to get sample diameter approximately 20.5 mm in diameter and approximately 20mm in height. The surface of samples was lubricated with silicon oil.

The dimensions of each gel section were measured before testing using a digital micrometer and these dimensions were used in the calculation of the fracture stress and fracture strain.

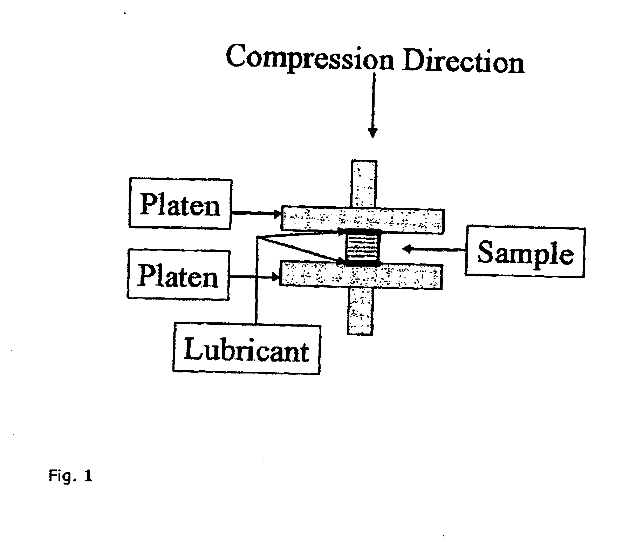

150mm platen was used to test gelled samples. Each cylindrical sample piece was placed between the platens as illustrated in Figure 1. The test was begun with the top platen moving downward and compressing the sample until it fractured. The force data was measured via the load cell as a function of the distance and the stress and strain were calculated as follows.

*Fig. 1 Experimental configuration for lubricated squeezing test*

Fracture stress

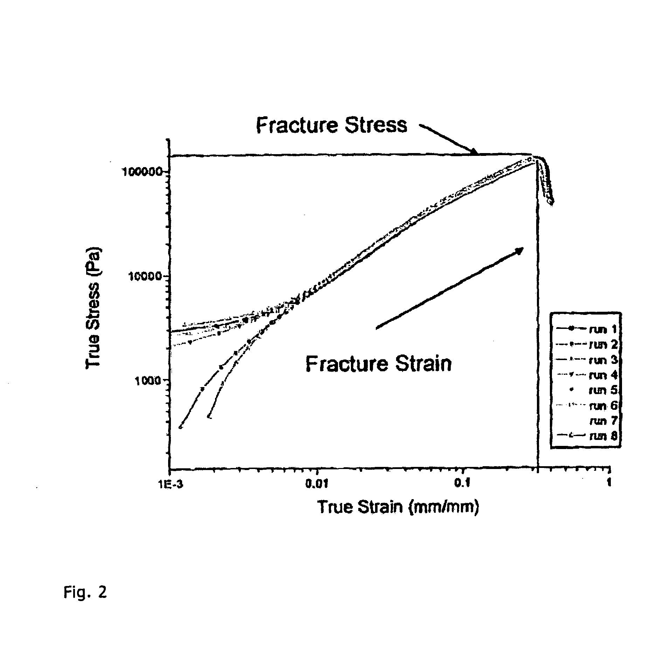

The fracture stress ($\tau$) is the stress generated in a material at fracture which is typically the peak stress in the stress-strain curve as illustrated in Figure 2. The stress is the applied load (F) divided by actual area of the cross section (S) through which load operates. It takes into account the change in cross section that occurs with changing load. The quantity S is equal to ($\Pi R2H0/H$) where R is the initial radius of the sample, H is the height at an instant in time, and H0 is the initial height of the sample and $\Delta H$ is the change in height during the test. The true stress is given by:

$$\sigma_{true} = \frac{F(1 - \frac{\Delta H}{H_0})}{\pi R^2}$$

$$\sigma_{true} = \frac{F(1 - \frac{\Delta H}{H_0})}{\pi R^2}$$

*Equation 1. Equations for stress where H0 is the initial sample cylinder height, DH is the change in height during the test, F is the force measured during the test, and R is the initial radius of the sample cylinder*

Fracture strain

The Fracture strain is the strain in a material at fracture which is typically the strain at which the stress peaks in a stress-strain curve as illustrated in Figure 2. The strain is the instantaneous percentage of change in length of specimen in mechanical test. It is equal to the natural logarithm of the ratio of height (H) at any instant to original height (Ho).

$$\varepsilon_{true} = -\ln(1 - \frac{\Delta H}{H_0})$$

*Equation 2. Equations for strain where H0 is the initial sample cylinder height and DH is the change in height during the test*

*Figure 2. Typical stress-strain curve with fracture stress and fracture strain marked at the peak of the stress-strain curve. Multiple runs are shown.*

Method of measurements for the Swelling Volume

To measure the swelling volume, the following procedure is followed:

Prepare 80 gm of starch slurry at 5% anhydrous solids in a cookup beaker. Use appropriate solvent to cook (data used from pH 6.5 buffer, pH 3 buffer etc).

Cook for 20 minutes using a boiling water bath. The degree of cook is important, so make sure that you set up the bath reproducibly (it is best to know that your bath temperature stays above 95°C for the entire 20 minutes. This cannot simply be done by setting the water bath to a strong boil, because then the water level can drop significantly, and then the sample may not see the desired temperature. Best practices include checking bath temperature every 5 minutes till you get good reproducible results).

Allow cook to cool, correct for moisture loss during cook. (Record weights of the beaker with the slurry, and stir rod before cooking, so that you can easily correct for moisture loss.)

Dilute to 1% solids using the same solvent that was used to cook the starch. To prepare the dilution, mix 21 gm of the 5% cook, with 84 gm of solvent (total 105gms), in a 250 ml beaker, and stir using stir plate for 10 minutes.

Place a 100 ml graduated cylinder on a flat scale balance. Tare. Transfer 100 gm of the diluted cook into the cylinder (The level should read about 98-99 ml on the cylinder). Cover cylinder with parafilm.

Allow sample to settle for 24 hours. Record the volume of the settled sample in milliliters.

The swelling volume, q was the volume of the settled material in ml divided by the mass of the settled material.

Method for Formal Visual Evaluation

Samples were always visually evaluated by one to five people and observed behaviour (spoon test, mouth impression) was captured.

Funnel Viscosity

The starch dispersion to be tested is adjusted to 19% (w/w) measured by refractometer. The temperature of the dispersion is controlled at 22.degree. C. A total of 100 ml of the starch dispersion is measured into a graduated cylinder. It is then poured into a calibrated funnel while using a finger to close the orifice. A small amount is allowed to flow into the graduate to remove any trapped air and the balance is poured back into the funnel. The graduated cylinder in then inverted over the funnel so that the contents draw (flow) into the funnel while the sample is running. Using a timer, the time required for the 100 ml sample to flow through the apex of the funnel is recorded.

The glass portion of the funnel is a standard 58.degree. C., thick-wall, resistance glass funnel whose top diameter is about 9 to about 10 cm with the inside diameter of the stem being about 0.381 cm. The glass stem of the funnel is cut to an approximate length of 2.86 cm from the apex, carefully fire-polished, and refitted with a long stainless steel tip with is about 5.08 cm long with an outside diameter of about 0.9525 cm. The interior diameter of the steel tip is about 0.5952 cm at the upper end where is attached to the glass stem and about 0.4445 cm at the outflow end with the restriction in the width occurring at about 2.54 cm from the ends. The steel tip is attached to the glass funnel by means of a Teflon tube. The funnel is calibrated so as to allow 100 ml of water to go through in six seconds using the above procedure.

The following examples are presented to further illustrate and explain the present invention and should not be taken as limiting in any regard. All parts and percentages are given by weight and all temperatures in degrees Celsius (°C) unless otherwise noted.

Example 1 - Waxy corn starch C / Debranched waxy maize A in 10% sugar milk

Material:

In this example, we used

- Component 1: Waxy corn starch enzymatically debranched A
- Component 2: Waxy corn starch C

Whole Milk + Sugar (Domino Superfine Sugar)

Blending:

A 10% sugar solution was prepared using whole milk. The starches were dry blended then hand stirred into the milk and sugar solution. The 100 gram samples were then cooked in a standard boiling bath for 20 minutes, stirring for the first 3 minutes then covered and left for the remaining 17 minutes. The cooks were removed from the bath, corrected for evaporation and divided, hot, into a 2 oz plastic jar and a stainless steel tube.

Both the jars and tubes were refrigerated overnight.

All the samples were removed from the refrigerator and brought to room temperature prior to evaluating.

Evaluation

The fracture strain ($\varepsilon$) and fracture stress ($\tau$) were measured for gelled samples.

Samples were always visually evaluated by one person and observed behaviour was captured.

Results for modified waxy corn starch C / debranched waxy maize A] blends:

Table 2. Ingredients for a pudding

| Sample | Use level of A+C[%wt/wt] | Ratio [C:A] | Use level of 10%sugar milk [%wt/wt] | Description | Fracture stress (kPa) | Fracture Strain (mm/mm) |
|---|---|---|---|---|---|---|
| 1 | 6% | 3:1 | 94% | sof gel | too soft to measure it | too soft to measure it |
| 2 | 6% | 5:1 | 94% | soft gel | too soft to measure it | too soft to measure it |
| 3 | 10% | 1:1 | 90% | firm gel | 1.95 ± 0.04 | 0.38 ± 0.01 |
| 4 | 10% | 3:1 | 90% | firm gel | 2.55 ± 0.1 | 0.41 ± 0.02 |
| 5 | 10% | 5:1 | 90% | firm gel | 3.04 ± 0.36 | 0.46 ± 0.02 |
| 6 | 10% | 9:1 | 90% | Soft gel | 5.69±0.08 | 0.55±0.02 |
| 7 | 10% | 1:5 | 90% | soft, non elastic gel | too soft to measure it | too soft to measure it |
| 8 | 10% | 1:3 | 90% | soft, non elastic gel | too soft to measure it | too soft to measure it |

Example 2 - Waxy corn starch B / Debranched waxy maize A in 10% sugar milk

Material:

In this example, we used

-   Component 1: Waxy corn starch enzymatically debranched A

-   Component 2: Waxy corn starch B

Whole Milk + Sugar (Domino Superfine Sugar)

Blending:

A 10% sugar solution was prepared using whole milk. The starches were dry blended then hand stirred into the milk and sugar solution. The 100 gram samples were then cooked in a standard boiling bath for 20 minutes, stirring for the first 3 minutes then covered and left for the remaining 17 minutes. The cooks were removed from the bath, corrected for evaporation and divided, hot, into a 2 oz plastic jar and a stainless steel tube.

Both the jars and tubes were refrigerated overnight.

All the samples were removed from the refrigerator and brought to room temperature prior evaluating.

Evaluation

The fracture strain and fracture stress were measured for gelled samples.

Samples were always visually evaluated by one person and observed behaviour was captured.

Results for [Modified waxy corn starch B / Debranched waxy maize A] blends:

Table 3. Ingredients for a pudding

| Sample | Use level of A+B [%wt/wt] | Ratio [B:A] | Use level of 10%sugar milk [%wt/wt] | Description | Fracture stress (kPa) | Fracture Strain (mm/mm) |
|---|---|---|---|---|---|---|
| 1 | 4% | 3:1 | 96% | soft gel | too soft to measure it | too soft to measure it |
| 2 | 4% | 5:1 | 96% | soft gel | too soft to measure it | too soft to measure it |
| 3 | 10% | 1:1.2 | 90% | firm gel | 5.38 ± 0.31 | 0.86 ± 0.04 |

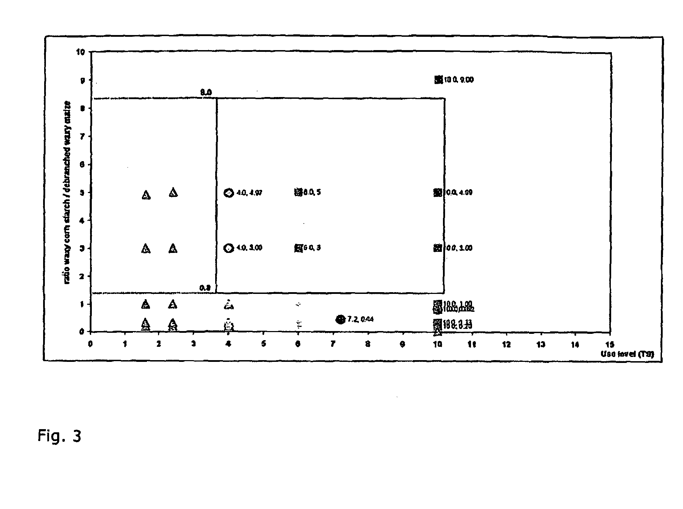

Behaviour illustrated in the following figure 3 to show the ratio as a function of the use level (total solid) of the two starches *Fig. 3 Ratio waxy corn starch / debranched waxy maize A as a function of the total starch use level (%) in the blends [A+B] and [A+C].*

*Triangles represent [A+B] not gelled samples. Circles represent [A+B] gelled samples. Trapezoides represent [A+C] not gelled samples. Squares represent [A+C] gelled samples.*

Example 3 - Waxy corn starch D/ Debranched waxy maize A in milk sugar mix

Material:

In this example, we used

- Component 1: Waxy corn starch enzymatically debranched A
- Component 2 : Waxy corn starch D

1.5% fat Milk (semi-skimmed milk - *Hansano-Milch AG, Germany*)
Protein 3.3%
Carbohydrate 4.8%
Sugar (*Sweet family - Nordzucker Braunschweig, Germany*)
Maltodextrin C*Dry MD 01915 *(Cerestar)* DE 18.5
Thermomix TM 31 (*Vorwerk & Co.KG, Mühlenweg 17-37, 42270 Wuppertal, Germany*).

Blending:

The starches were blended with the sugar. The milk was filled into a

Thermomix TM 31. The milk was stirred gently (shear set to step 1:

100RPM) and the dry mix was slowly added into the milk. The milk slurry was heated to 80°C, while gently stirring. The mix was cooked for ~6min to a good degree of cook of the granular starch (microscopic evaluation). The mix was then divided into two portions, one which was hot filled into 180ml sterile plastic beakers and one which was cooled down to 25°C in an ice bath and filled afterwards into 180ml sterile plastic beakers. The samples were stored overnight in a refrigerator at 5°C.

Evaluation

All samples were evaluated one day after production at room temperature with sensorial. Samples were always visually evaluated by five people and observed behaviour was captured.

Table 4. Ingredients for a pudding

| Sample | Use level of A+D [%Wt/Wt] | Ratio [D:A] | Use level of Milk (UHT 1,5% fat) [%wt/wt] | Maltodextrine C*Dry MD 01915 | Sugar | Description |
|---|---|---|---|---|---|---|
| 1 | 3% | 2:1 | 88% | 8.00 | 1.00 | too thin |
| 2 | 7% | 1:2.5 | 88% | 4.00 | 1.00 | chalky/not sandy |
| 3 | 11% | 1.2:1 | 88% | 0.00 | 1.00 | chewy/egg white structure |
| 4 | 3% | 2:1 | 82% | 8.00 | 7.00 | too thin |
| 5 | 9% | 2:1 | 85% | 2.00 | 4.00 | chewy |
| 6 | 5% | 4:1 | 85% | 6.00 | 4.00 | too thin |

For these compositions, total solid from starches and other ingredients were kept constant at 12% using sugar and maltodextrine.

Example 4 - Waxy corn starch E / Debranched waxy maize A in milk and sugar

Material:

In this example, we used

- Component 1: Waxy corn starch enzymatically debranched A

- Component 2: Waxy corn starch E

Whole Milk + Sugar (Domino Superfine Sugar)

Blending:

The starches and sugar were dry blended, added to a container with the milk and hand stirred together to blend well. The mixture was passed to the Thermomix Kettle. The shear was set to step 1 (100RPM) and the temperature to 200°F. The temperature was hold at 200°F for 25 minutes. The samples were filled hot into jars and let cool without caps for about 5-10 minutes before to be caped placed in refrigerator.

Samples were always visually evaluated by one person and observed behaviour was captured.

The firmness, mouthcoating, meltaway and viscosity were evaluated.

Results for Modified waxy corn starch E / Debranched waxy maize A blends:

Table 5. Ingredients for a pudding

| Sample | Use level of A+E [%wt/wt] | Ratio [E:A] | Use level of whole milk [%wt/wt] | Fine grain sugar | Description |
|---|---|---|---|---|---|
| 1 | 9.25% | 1.3:1 | 80% | 10% | firm gel - very gelled texture, almost a thick custard, cheesecake like, very high viscosity |
| 2 | 8.00% | 1:1 | 82% | 10% | soft gel - low mouth coating - high meltaway |
| 3 | 5.00% | 4:1 | 85% | 10% | no gel but thick - low mouthcoating - high meltaway |

Example 5 - Pure components, waxy corn starch B or debranched waxy maize A, in 10% sugar milk

Material:

In this example, we used either

-    Component 1: Waxy corn starch enzymatically debranched A; -or-

-    Component 2: Waxy corn starch B

Whole Milk + Sugar (Domino Superfine Sugar)

Blending:

A 10% sugar solution was prepared using whole milk. The starches were separately hand stirred into the milk and sugar solution. The 100 gram samples were then cooked in a standard boiling bath for 20 minutes, stirring for the first 3 minutes then covered and left for the remaining 17 minutes. The cooks were removed from the bath, corrected for evaporation and divided, hot, into a 2 oz plastic jar and a stainless steel tube.
Both the jars and tubes were refrigerated overnight.
All the samples were removed from the refrigerator and brought to room temperature prior evaluating.

Table 6. Ingredients for a pudding

| Sample | Use level of A [%wt/wt] | Use level of B [%wt/wt] | Use level of 10%sugar regular milk [%wt/wt] | Description | Fracture stress (kPa) | Fracture strain (mm/mm) |
|---|---|---|---|---|---|---|
| 1 | 10% | 0% | 90% | extremely soft gel - thick paste | 0.46±0.08 | 004±002 |
| 2 | 0% | 10% | 90% | thickened | Could not be determined | Could not be determined |

**Claims**

1.  A blend consisting essentially of a non-high amylose starch containing less than 50% amylose by weight of the starch which has been stabilized and inhibited and a waxy starch which has been enzymatically debranched in a ratio of from 0.8:1 to 8:1.

2.  The blend of claim 1, wherein both starches are waxy corn starches.

3.  The blend of claim 1, wherein the non-high amylose starch is a tapioca starch.

4.  The blend of any one of claims 1-3, wherein the stabilized and inhibited starch is a granular starch.

5.  The blend of any one of claims 1-4, wherein the stabilized and inhibited starch has been stabilized with propylene oxide and inhibited with phosphorous oxychloride.

6.  The blend of any one of claims 1-5, wherein the debranched starch has been debranched using isoamylase or pullulanase.

7.  The blend of any one of claims 1-6, wherein the debranched starch is debranched to greater than 80% short chain amylose, preferably to greater than 85% short chain amylose.

8.  The blend of any one of claims 1-7, wherein the stabilized and inhibited starch has a swelling volume of 10-60.

9.  The blend of any one of claims 1-8, wherein the blend has a fracture stress value of from 1.5 kPa and 5.5 kPa.

**10.** The blend of any one of claims 1-9, wherein the blend has a fracture strain value of from 0.35 to 0.86 mm/mm.

**11.** The blend of any one of claims 1-10, wherein the ratio of the waxy starch which has been enzymatically debranched to the non-high amylose starch is 1:1 to 5:1.

**12.** A product comprising the blend of any one of claims 1-11 and at least one additional ingestible ingredient.

**13.** The product of claim 12, wherein the blend is added in an amount of from 0.01% to 15% of the composition by weight.

**14.** The product of claim 12 or 13, wherein the stabilized and inhibited starch is at a concentration of at least 4.5% (wt/wt) of the product.

**15.** The product of claim 16, wherein the stabilized and inhibited starch is at a concentration of at least 6.5% (wt/wt), preferably of at least 8% (wt/wt), of the product.

**16.** The product of any one of claims 12-15, wherein the blend is at a concentration of from 6.5% to 15% (wt/wt), preferably of from 4.5% to 12% (wt/wt), of the product.


**Patentansprüche**

**1.** Gemisch, das im Wesentlichen aus Stärke, die keinen hohen Amylosegehalt hat und weniger als 50 % Amylose enthält, und zwar auf das Gewicht der Stärke bezogen, die stabilisiert und passiviert ist, und einer wachsartigen Stärke, deren Verzweigungen enzymatisch entfernt worden sind, in einem Verhältnis von 0,8:1 bis 8:1 besteht.

**2.** Gemisch nach Anspruch 1,
wobei beide Stärken wachsartige Maisstärken sind.

**3.** Gemisch nach Anspruch 1,
wobei die Stärke, die keinen hohen Amylosegehalt hat, Maniokstärke ist.

**4.** Gemisch nach einem der Ansprüche 1 bis 3,
wobei die stabilisierte und passivierte Stärke körnige Stärke ist.

**5.** Gemisch nach einem der Ansprüche 1 bis 4,
wobei die stabilisierte und passivierte Stärke mit Propylenoxid stabilisiert und mit Phosphoroxychlorid passiviert ist.

**6.** Gemisch nach einem der Ansprüche 1 bis 5,
wobei die Verzweigungen der Stärke mit entfernten Verzweigungen unter Verwendung von Isoamylase oder Pullulanase entfernt worden sind.

**7.** Gemisch nach einem der Ansprüche 1 bis 6,
wobei die Verzweigungen der Stärke mit entfernten Verzweigungen bis auf mehr als 80 % kurzkettige Amylose, vorzugsweise mehr als 85 % kurzkettige Amylose entfernt worden sind.

**8.** Gemisch nach einem der Ansprüche 1 bis 7,
wobei die stabilisierte und passivierte Stärke ein Quellvolumen von 10 bis 60 aufweist.

**9.** Gemisch nach einem der Ansprüche 1 bis 8,
wobei das Gemisch einen Bruchspannungswert von 1,5 und 5,5 kPa aufweist.

**10.** Gemisch nach einem der Ansprüche 1 bis 9,
wobei das Gemisch einen Bruchspannungswert von 0,35 bis 0,86 mm/mm aufweist.

**11.** Gemisch nach einem der Ansprüche 1 bis 10,
wobei das Verhältnis zwischen der wachsartigen Stärke, deren Verzweigungen enzymatisch entfernt worden sind, und der Stärke, die keinen hohen Amylosegehalt aufweist, 1:1 bis 5:1 beträgt.

**12.** Produkt, das das Gemisch nach einem der Ansprüche 1 bis 11 und zumindest einen weiteren essbaren Bestandteil aufweist.

**13.** Produkt nach Anspruch 12,
wobei das Gemisch in einer Menge von 0,01 bis 15 % der Zusammensetzung zugesetzt wird, und zwar auf das Gewicht bezogen.

**14.** Produkt nach Anspruch 12 oder 13,
wobei die stabilisierte und passivierte Stärke in einer Konzentration von mindestens 4,5 % (Gew./Gew.) des Produktes vorliegt.

**15.** Produkt nach Anspruch 16,
wobei die stabilisierte und passivierte Stärke in einer Konzentration von mindestens 6,5 % (Gew./Gew.), vorzugsweise von mindestens 8 % (Gew./Gew.), des Produktes vorliegt.

**16.** Produkt nach einem der Ansprüche 12 bis 15,
wobei das Gemisch in einer Konzentration von 6,5 bis 15 % (Gew./Gew.), vorzugsweise von 4,5 bis 12 % (Gew./Gew.) des Produktes vorliegt.


**Revendications**

**1.** Mélange consistant essentiellement en un amidon non à haute teneur en amylose, contenant moins de 50 % d'amylose en poids de l'amidon, qui a été stabilisé et inhibé et un amidon cireux qui a été soumis à une déramification enzymatique en un rapport de 0,8:1 à 8:1.

**2.** Mélange suivant la revendication 1, dans lequel les deux amidons sont des amidons de maïs cireux.

**3.** Mélange suivant la revendication 1, dans lequel l'amidon non à haute teneur en amylose est un amidon de manioc.

**4.** Mélange suivant l'une quelconque des revendications 1 à 3, dans lequel l'amidon stabilisé et inhibé est un amidon granulaire.

**5.** Mélange suivant l'une quelconque des revendications 1 à 4, dans lequel l'amidon stabilisé et inhibé a été stabilisé avec de l'oxyde de propylène et inhibé avec de l'oxychlorure de phosphore.

**6.** Mélange suivant l'une quelconque des revendications 1 à 5, dans lequel l'amidon déramifié a été déramifié en utilisant de l'isoamylase ou de la pullulanase.

**7.** Mélange suivant l'une quelconque des revendications 1 à 6, dans lequel l'amidon déramifié est déramifié à plus de 80 % d'amylose à chaîne courte, de préférence à plus de 85 % d'amylose à chaîne courte.

**8.** Mélange suivant l'une quelconque des revendications 1 à 7, dans lequel l'amidon stabilisé et inhibé a un volume de gonflement de 10 à 60.

**9.** Mélange suivant l'une quelconque des revendications 1 à 8, ledit mélange ayant une valeur de tension à la rupture de 1,5 kPa à 5,5 kPa.

**10.** Mélange suivant l'une quelconque des revendications 1 à 9, ledit mélange ayant une valeur de déformation à la rupture de 0,35 à 0,86 mm/mm.

**11.** Mélange suivant l'une quelconque des revendications 1 à 10, dans lequel le rapport de l'amidon cireux qui a été déramifié enzymatiquement à l'amidon non à haute teneur en amylose va de 1:1 à 5:1.

**12.** Produit comprenant le mélange de l'une quelconque des revendications 1 à 11 et au moins un ingrédient supplémentaire pouvant être ingéré.

**13.** Produit suivant la revendication 12, dans lequel le mélange est ajouté en une quantité de 0,01 % à 15 % de la composition en poids.

14. Produit suivant la revendication 12 ou 13, dans lequel l'amidon stabilisé et inhibé est présent en une concentration d'au moins 4,5 % (en poids/poids) du produit.

15. Produit suivant la revendication 16, dans lequel l'amidon stabilisé et inhibé est présent en une concentration d'au moins 6,5 % (en poids/poids), de préférence d'au moins 8 % (en poids/poids), du produit.

16. Produit suivant l'une quelconque des revendications 12 à 15, dans lequel le mélange est présent en une concentration de 6,5 % à 15 % (en poids/poids), de préférence de 4,5 % à 12 % (en poids/poids), du produit.

# Compression Direction

Platen

Platen

Lubricant

Sample

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1362517 A
- EP 1362869 A
- WO 9504082 A
- WO 9640794 A

**Non-patent literature cited in the description**

- Starch and Its Modifications. **M. W. RUTENBERG.** Handbook of Water-Soluble Gums and Resins. Mc-Graw Hill, Inc, 1980, 22-36
- **WURZBURG, O.B.** Modified Starches: Properties and Uses. CRC Press, Inc, 1986